# EUROPEAN PATENT APPLICATION

(11) **EP 1 777 715 A1**
(43) Date of publication of application: **25.04.2007**
(21) Application number: 06017805.0
(22) Date of filing: 25.08.2006
(51) Int. Cl.: H01G 9/10, H01G 9/155

(54) **Electric double layer capacitor**

(30) Priority: 29.08.2005 JP 2005247172
(71) Applicant: SANYO ELECTRIC CO., LTD., Moriguchi-shi, Osaka 570-8677 (JP)
(72) Inventor: Omura, Seiji, Kobe-shi Hyogo 654-0064 (JP); Shirasaka, Mitsuru, Amagasaki-shi Hyogo 661-0975 (JP)
(74) Representative: Glawe, Delfs, Moll

(57) **Abstract**

An electric double layer capacitor has an electrode unit (10), an external lid (4), an external case, and a gasket (8) disposed between the external lid (4) and the external case (5). The external case (5) has an open end part that is bent inwardly with the external lid and the external case being disposed so that inner surfaces of the top wall and the bottom wall face each other, to hermetically close an accommodating space, formed by the external case and the external lid. The thickness of at least the circumferential wall of the external lid (4) is greater than the thickness of the external case (5). The circumferential wall of the external lid (4) extends substantially linearly toward the bottom wall of the external case (5), and the extending edge of the circumferential wall of the external lid (4) is buried in the gasket (8).

## Description

### BACKGROUND OF THE INVENTION

### Field of the Invention

The present invention relates to a button-shaped electric double layer capacitor comprising a pair of electrodes opposing each other with a separator interposed therebetween in which an electrolyte solution is impregnated.

### Description of Related Art

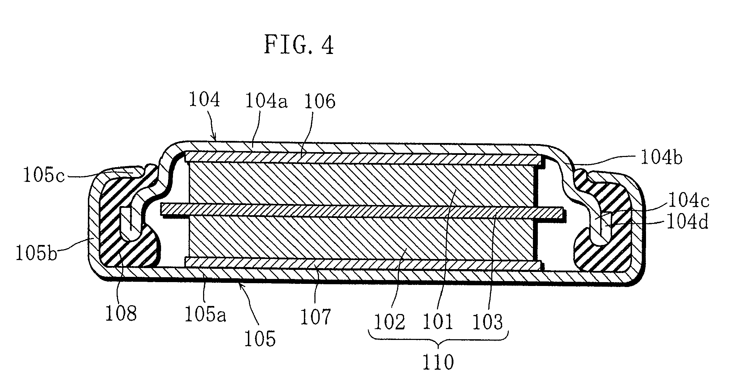

A button-shaped electric double layer capacitor as shown in Fig. 4 is well known. The electric double layer capacitor has an electrode unit 110 in which a first polarizable electrode 101 made of, for example, activated carbon, and a second polarizable electrode 102 also made of, for example, activated carbon, are opposed to each other across a separator 103 interposed between the electrodes. The electrode unit 110 is impregnated with an electrolyte solution. The first polarizable electrode 101 is electrically connected via a first current collector 106 to an external lid 104, which serves as the cathode terminal, and the second polarizable electrode 102 is electrically connected via a second current collector 107 to an external case 105, which serves as the anode terminal. The electrode unit 110 is accommodated in an accommodating space defined by the external case 105 and the external lid 104.

The external lid 104 has a shallow dish-like shape. Specifically, it comprises a top wall 104a, a first circumferential wall 104b having a smaller diameter and adjoining the peripheral edge of the top wall 104a, and a second circumferential wall 104c having a larger diameter and adjoining the first circumferential wall 104b. On the other hand, the external case 105 has a shallow dish-like shape, and specifically, it comprises a bottom wall 105a and a circumferential wall 105b adjoining the peripheral edge of the bottom wall 105a. An electrically insulative gasket 108 is disposed between the inner surface of the circumferential wall 105b and the outer surfaces of the first circumferential wall 104b and the second circumferential wall 104c. An open end part 105c of the external case 105 is bent inwardly, whereby the accommodating space defined by the external case 105 and the external lid 104 is hermetically closed. A folded part 104d is formed at the edge part of the second circumferential wall 104c. The folded part 104d serves to improve the strength of the external lid 104, and to apply pressure to the gasket 108 so that the hermeticity can be improved. (See, for example, page 2 and Fig. 3 of Japanese Published Unexamined Patent Application No. 8-222192).

The presence of the folded part 104d, however, narrows the accommodating space, which is formed by the external lid 104 and the external case 105. Specifically, the diameter of the first circumferential wall 104b of the external lid 104 needs to be made smaller corresponding to the thickness increase of the external lid, which is due to the provision of the folded part 104d. Therefore, the diameter of the electrode unit 110 placed in the accommodating space cannot be made large, so the capacitance of the electric double layer capacitor cannot be increased if the size of the electric double layer capacitor is fixed.

### BRIEF SUMMARY OF THE INVENTION

In view of the foregoing problem, it is an object of the present invention to provide an electric double layer capacitor that has a large capacitance and achieves good productivity.

In order to accomplish the foregoing and other objects, the present invention provides an electric double layer capacitor comprising: a) an electrode unit having a separator, first and second electrodes opposing each other across the separator therebetween, and an electrolyte solution impregnated in the electrode unit; b) an external lid, formed in a flattened U-shape in cross section, having a top wall and a circumferential wall adjoining the peripheral edge of the top wall; c) an external case, formed in a flattened U-shape in cross section, having a bottom wall and a circumferential wall adjoining the peripheral edge of the bottom wall; and d) a gasket disposed between an outer surface of the external lid and an inner surface of the external case, the electric double layer capacitor being configured so that the external case has an open end part that is bent inwardly with the external lid and the external case being disposed so that inner surfaces of the top wall and the bottom wall face each other, to hermetically close an accommodating space, formed by the external case and the external lid, for accommodating the electrode unit, wherein: the thickness of at least the circumferential wall of the external lid is greater than the thickness of the external case; and the circumferential wall of the external lid extends substantially linearly toward the bottom wall of the external case, and the extending edge of the circumferential wall of the external lid is buried in the gasket.

The configuration in which the thickness of at least the circumferential wall of the external lid is greater than the thickness of the external case as described above allows the strength of the external lid to be greater, and therefore, can prevent deformation of the external lid such as crimping even when a large pressure acts on the external lid in the process step of hermetically closing the accommodating space formed by the external case and the external lid by bending the open end part of the external case inwardly. As a result, hermeticity of the external case and the external lid can be improved. In addition, the configuration in which the circumferential wall of the external lid extends substantially linearly toward the bottom wall of the external case (in other words, the configuration in which no folded part is provided at the edge of the circumferential wall of the external lid) allows the space in which both electrodes are disposed to be greater than that of the conventional products, making it possible to increase the capacitance. Moreover, the configuration in which the extending edge of the circumferential wall of the external lid is buried in the gasket allows the portion of the circumferential wall engaged with the gasket to be greater than the conventional product in which the folded part is provided, further improving the hermeticity of the accommodating space formed by the external case and the external lid. It should be noted that the configuration in which "the thickness of at least the circumferential wall of the external lid is greater than the thickness of the external case" is not limited to the configuration in which the top wall and the circumferential wall of the external lid (the entire external lid) has a uniform thickness and the thickness is greater than the thickness of the external case, but is intended to include such a configuration in which the thickness of the circumferential wall of the external lid is greater than the thickness of the external case and the thickness of the top wall of the external lid is smaller than the thickness of the external case.

In the present invention, the ratio between the thickness of at least the circumferential wall of the external lid and the thickness of the external case may be restricted to 1.1 : 1 to 2 : 1. This restriction is made for the following reason. Specifically, if the external lid is thinner than the thickness defined by the foregoing ratio, strength of the external lid becomes too weak. As a consequence, in the process step of bending the open end part of the external case inwardly to hermetically close the accommodating space defined by the external case and the external lid, the hermeticity may degrade due to, for example, crimping of the external lid. On the other hand, if the external lid is thicker than the thickness defined by the foregoing ratio, the space formed by the external lid and the external case is so narrow that the effect of capacitance increase may reduce.

The circumferential wall of the external lid may comprise a first circumferential wall having a smaller diameter and adjoining the peripheral edge of the top wall, and a second circumferential wall having a larger diameter and adjoining the first circumferential wall.

In the present invention, it is preferable that the extending edge of the circumferential wall of the external lid have, at a bottom surface thereof (at a bottom surface of the second circumferential wall when the circumferential wall of the external lid comprises the first circumferential wall and the second circumferential wall), a recessed part into which the gasket fits. By employing this configuration, the gasket is allowed to fit into the recessed part, so the hermeticity can be enhanced. It is preferable that the recessed part have a depth of from 5 µm to 50 µm. The reason is as follows. When the depth of the recessed part is equal to or greater than 5 µm, the gasket will more firmly fit into the recessed part, further improving the hermeticity. On the other hand, if the depth of the recessed part is greater than 50 µm, the gasket may be damaged in the process step of bending the open end part of the external case inwardly, which may cause cracks.

It is preferable that the gasket comprises as its main component polyether ether ketone, which has high resistance to electrolyte solution and high heat resistance. In addition, it is preferable that the gasket is heat-treated at a temperature higher than a solder melting point (for example, 260°C). The reason is that heat-treating the gasket in advance at a temperature higher than the heating temperature in the reflow soldering process promotes crystallization of the gasket, thereby allowing the gasket to become more stable physically, and thus, adhesiveness of the gasket to the external lid and the external case improves.

By employing the present invention, hermeticity of the accommodating space formed by the external lid and the external case of the electric double layer capacitor can be enhanced without narrowing the accommodating space formed by the external lid and the external case.

### BRIEF DESCRIPTION OF THE DRAWINGS

Fig. 1 is a cross-sectional view illustrating an electric double layer capacitor according to the present invention;
Fig. 2 is a cross-sectional view illustrating an electric double layer capacitor according to a modified example of the present invention;
Fig. 3A is a cross-sectional view illustrating a portion near the extending edge of the external lid in another modified example;
Fig. 3B is a cross-sectional view illustrating a portion near the extending edge of the external lid in yet another modified example;
Fig. 3C is a cross-sectional view illustrating a portion near the extending edge of the external lid in still another modified example; and
Fig. 4 is a cross-sectional view illustrating a conventional electric double layer capacitor.

### DESCRIPTION OF THE PREFERRED EMBODIMENTS

Hereinbelow, the present invention is described in further detail based on preferred embodiments thereof. It should be construed, however, that the present invention is not limited to the following preferred embodiments but various changes and modifications are possible without departing from the scope of the invention.

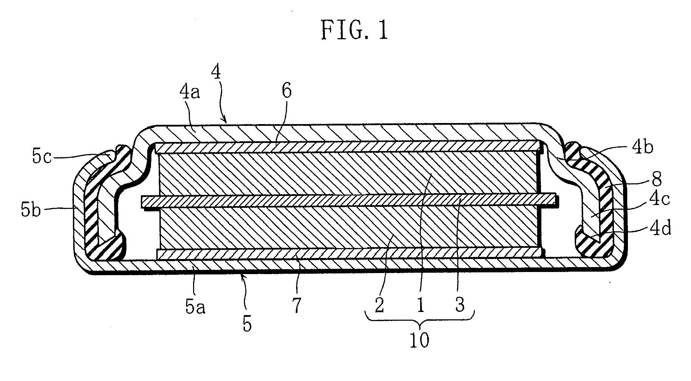

An electric double layer capacitor according to the present invention comprises, as illustrated in Fig. 1, an electrode unit 10 having a first polarizable electrode 1 (first electrode) made of activated carbon, a second polarizable electrode 2 (second electrode) also made of activated carbon, and a separator 3 interposed therebetween. The first polarizable electrode 1 and the second polarizable electrode 2 are disposed so as to oppose each other across the separator 3. The electrode unit 10 is impregnated with an electrolyte solution in which triethylmethylammonium tetrafluoroborate, which serves as a supporting salt, is dissolved in a mixed organic solvent of propylene carbonate and sulfolane.

The first polarizable electrode 1 is electrically connected via a first conductive current collector 6 to an external lid 4 serving as the cathode terminal, and the second polarizable electrode 2 is electrically connected via a second conductive current collector 7 to an external case 5 serving as the anode terminal. The external case 5 and the external lid 4 are made of stainless steel, and the electrode unit 10 is accommodated in the accommodating space defined by the external case 5 and the external lid 4. The external lid 4 has a shallow dish-like shape, and it comprises, specifically, a top wall 4a, a first circumferential wall 4b having a smaller diameter and adjoining the peripheral edge of the top wall 4a, and a second circumferential wall 4c having a larger diameter and adjoining the first circumferential wall 4b. Likewise, the external case 5 has a shallow dish-like shape, and it comprises, specifically, a bottom wall 5a and a circumferential wall 5b adjoining the peripheral edge of the bottom wall 5a.

The second circumferential wall 4c of the external lid 4 extends substantially linearly toward the bottom wall 5a of the external case 5, and unlike the conventional case, no folded part is formed at the edge part of the second circumferential wall 4c. The electric double layer capacitor of the present invention is designed so that the thickness of the external lid 4 is greater than the thickness of the external case 5 (specifically, the thickness of the external lid 4 is 0.2 mm, and the thickness of the external case 5 is 0.15 mm), and therefore, the strength of the external lid 4 becomes sufficiently large even when no folded part is provided at the edge part of the second circumferential wall 4c. Furthermore, in comparison with the case in which a folded part is provided, the space in which the polarizable electrodes 1 and 2 are to be disposed can be made larger corresponding to the thickness of the folded part. As a result, the capacitance can be increased.

In addition, an electrically insulative gasket 8 is disposed between the inner surface of the circumferential wall 5b and the outer surfaces of the first circumferential wall 4b and the second circumferential wall 4c, so that the accommodating space defined by the external case 5 and the external lid 4 is hermetically closed by bending an open end part 5c of the external case 5 inwardly.

It should be noted that the electric double layer capacitor of the present invention is configured so that the open end edge 4d of the external lid 4 (equivalent to the extending edge of the circumferential wall) is buried in the gasket 8, in addition to the configuration in which no folded part is provided. This configuration allows the portion of the circumferential wall engaged with the gasket 8 to be greater than the conventional product that is provided with the folded part, and thus makes it possible to further improve the hermeticity of the accommodating space formed by the external case 5 and the external lid 4.

It is preferable that the ratio of the thicknesses of the external lid 4 and the external case 5 be 1.1 : 1 to 2 : 1. This restriction is made for the following reason. Specifically, if the external lid 4 is thinner than the thickness defined by the foregoing ratio, the strength of the external lid 4 is too weak. As a consequence, the hermeticity may degrade due to, for example, crimping of the external lid 4 in the process step of bending the open end part 5d of the external case 5 inwardly to hermetically close the accommodating space formed by the external case 5 and the external lid 4. On the other hand, if the external lid 4 is thicker than the thickness defined by the foregoing ratio, the space formed by the external lid 4 and the external case 5 is so narrow that the effect of capacitance increase may reduce.

The electric double layer capacitor is fabricated in the following manner.

### Preparation of Polarizable Electrodes

Activated carbon, acetylene black, and polytetrafluoroethylene are mixed at a weight ratio of 90 : 5 : 5. The resultant mixture is shaped into a disk-like shape with a diameter of 2.2 mm and a thickness of 0.5 mm, and thereafter vacuum dried at 150°C for 2 hours, to thus prepare the first polarizable electrode 1 and the second polarizable electrode 2.

### Preparation of Electrolyte Solution

An electrolyte solution is prepared by dissolving triethylmethylammonium tetrafluoroborate, which is a supporting salt, into an organic mixed solvent of a 50 : 50 volume ratio mixture of propylene carbonate and sulfolane at a concentration of 1.0 mole/liter.

### Assembling of Button-type Electric Double Layer Capacitor

First, a conductive coating (made of a mixture of graphite powder and water glass), which later forms the current collectors 6 and 7, is applied onto the inner surface of the external lid 4 of the top wall 4a and onto the inner surface of the bottom wall 5a of the external case 5. Next, the first polarizable electrode 1 is disposed on top of the conductive coating that has been applied to the top wall 4a of the external lid 4, and the second polarizable electrode 2 is disposed on top of the conductive coating that has been applied to the bottom wall 5a of the external case 5; thereafter, the electrodes with the conductive coating are heated to thereby form the first and second current collectors 6 and 7. Next, the separator 3 is placed onto the second polarizable electrode 2, and thereafter, the electrolyte solution is impregnated in the first polarizable electrode 1, the second polarizable electrode 2, and the separator 3. Thereafter, the external lid 4 is disposed in the external case 5 so that the first polarizable electrode 1 is arranged on the second polarizable electrode 2 with the separator 3 interposed therebetween. At this time, the gasket 8 made of polyether ether ketone is disposed between the inner surface of the circumferential wall 5b of the external case 5 and the outer surfaces of the first circumferential wall 4b and the second circumferential wall 4c of the external lid 4. Subsequently, the open end part 5c of the external case 5 is bent inwardly and thereby the open end edge 4d of the external lid 4 is buried into the gasket 8, to hermetically seal the accommodating space defined by the external case 5 and the external lid 4. Thus, the button-type electric double layer capacitor is fabricated.

### EXAMPLES

### Example

Samples of the above-described button-type electric double layer capacitor were prepared in the just-described manner.

The button-type electric double layer capacitor thus fabricated is hereinafter referred to as Capacitor A of the invention.

### Comparative Example

Samples of the conventional button-type electric double layer capacitor were fabricated in the same manner as in the Example described above, except that a folded part was provided at the edge of the external lid and that the polarizable electrodes had a diameter of 2.0 mm and a thickness of 0.5 mm.

The button-type electric double layer capacitor thus fabricated is hereinafter referred to as Comparative Capacitor Z.

### Experiment

The capacitances of the samples of Capacitor A of the invention and Comparative Capacitor Z were measured, and the mean values were obtained. The results are shown in Table 1 below. The number of the samples was 50 for each of the capacitors.

**TABLE 1**

| | Capacitance (mF) |
|---|---|
| Capacitor A | 63 |
| Comparative Capacitor Z | 51 |

As clearly seen from Table 1, Capacitor A of the invention exhibited a higher capacitance than Comparative Capacitor Z. This is because Capacitor A of the invention made it possible to more effectively utilize the accommodating space formed by the external lid 4 that has conventionally been unable to be utilized because of the presence of the folded part, so it became possible to dispose the polarizable electrodes 1 and 2 with a larger size.

Moreover, the present invention makes it possible to improve the strength of the external lid 4 by making the thickness of the external lid 4 greater than the thickness of the external case 5. Furthermore, fitting the open end edge 4d of the external lid 4 into the gasket 8 toward the bottom wall 5a of the external case 5 allows the portion of the open end edge 4d engaged with the gasket 8 to be greater than Comparative Example, which is provided with a folded part. Therefore, the hermeticity of the accommodating space formed by the external case 5 and the external lid 4 can be enhanced.

### Other Embodiments

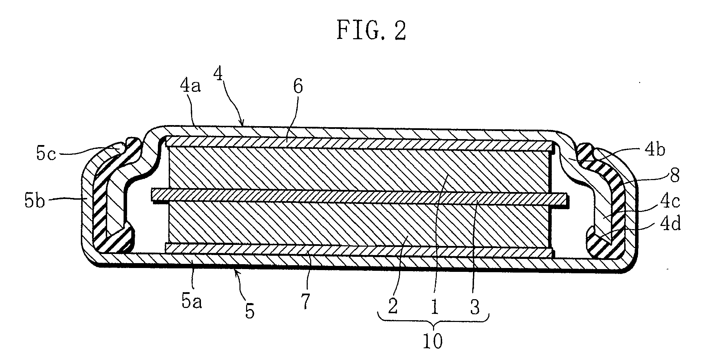

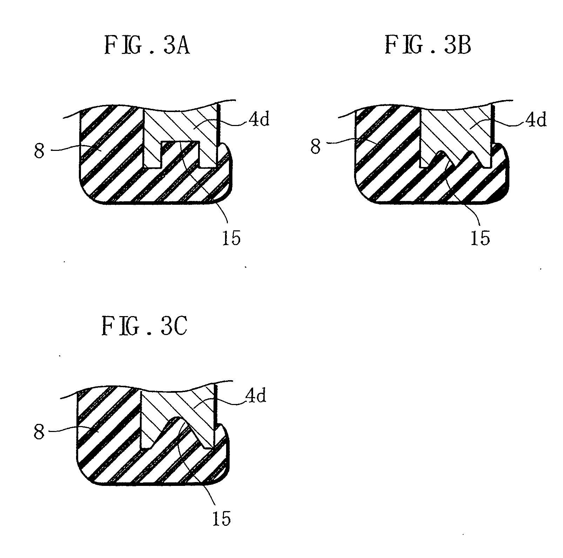

(1) Although the foregoing example has described that the circumferential wall of the external lid 4 is made of the first circumferential wall 4b and the second circumferential wall 4c with different diameters, it is possible to construct the circumferential wall with a uniform diameter.
   In addition, although the foregoing Example has described a configuration in which the thickness of the entire external lid 4 (which is made of the top wall 4a, the first circumferential wall 4b, and the second circumferential wall 4c) is greater than the thickness of the external case 5, it is also possible to adopt a configuration in which, as illustrated in Fig. 2, the first circumferential wall 4b and the second circumferential wall 4c have the same thickness that is greater than the thickness of the external case 5 while the thickness of the top wall 4a is smaller than the thickness of the external case 5.
(2) The bottom surface of the open end edge 4d of the external lid 4 (equivalent to the bottom surface of the second circumferential wall 4c) may be provided with a recessed part 15, as illustrated in Figs. 3A to 3C. This configuration enables the size of the polarizable electrodes 1 and 2 to be greater than the conventional product in which a folded part is provided, making it possible to improve the capacitance. Moreover, the gasket 8 fits into the recessed part 15 so that the hermeticity can improve. The recessed part 15 may be processed into various shapes including a substantially U-shaped cross-sectional shape shown in Fig. 3A, a substantially W-shaped cross-sectional shape shown in Fig. 3B, and a substantially V-shaped cross-sectional shape shown in Fig. 3C.
(3) It is preferable that the depth of the recessed part 15 be in the range of from 5 µm to 50 µm. This restriction is made for the following reason. When the depth of the recessed part 15 is 5 µm or greater, the gasket 8 will more firmly fit into the recessed part 15, further enhancing the hermeticity. On the other hand, if the depth of the recessed part 15 is greater than 50 µm, the gasket 8 may be damaged in the process step of bending the open end part 5b inwardly, which becomes a cause of cracks.
(4) Examples of the material for the separator 3 used in the present invention include, but are not limited to, glass fibers and resins such as polyphenylene sulfide, polyethylene terephthalate, polyamide, and polyimide, to form an insulative film that has a large ion permeability and also achieves predetermined mechanical strengths. In addition, the pore size of the separator 3 may be any size as long as it falls within the range that is generally employed for capacitors; for example, the pore size may be in the range of from 0.01 µm to 5 µm. In addition, the thickens of the separator 3 may be any thickness that is commonly employed, for example, in the range of from 10 µm to 300 µm.
(5) The polarizable electrodes 1 and 2 may employ conventionally used materials such as activated carbon etc. Although the foregoing Example has described that the polarizable electrodes are made of a material comprising an active material and a binder agent, it is possible to add a conductive agent thereto when the conductivity of the active material is low.
   The active material may be made of powdery activated carbon that is obtained by subjecting a material such as sawdust, coconut shell, and pitch to an activation process. It is also possible to use a material obtained by subjecting a fiber material such as phenol-based fiber, rayon-based fiber, acryl-based fiber, and pitch-based fiber to an infusible process and a carbonization activation process, thereby producing activated carbon or activated carbon fiber, and forming the resultant material into a felt, fiber, paper, or sinter form. Other usable examples include metallic compounds and carbon materials such as carbon nanotubes.
   The binder agent may be any binder agent that is commonly used for electric double layer capacitors. Examples include polytetrafluoroethylene, polyvinylidene fluoride, polyvinyl pyrrolidone, polyvinyl chloride, polyethylene, polypropylene, polyfluoroethylenepropylene, ethylene-propylene-diene terpolymer, styrene-butadiene rubber, carboxymethylcellulose, and fluorocarbon rubber.
   The conductive agent may be any conductive agent that is commonly used for electric double layer capacitors; examples include natural graphite such as flaked graphite and earthy graphite, artificial graphite, carbon black, acetylene black, Ketjen Black, and carbon fibers.
(6) The electrolyte solution may be made of any materials that have conventionally been used. For example, the foregoing Example used an electrolyte solution in which a supporting salt was dissolved in an organic solvent containing propylene carbonate. Here, when propylene carbonate is mixed with another solvent, the other solvent is not limited to sulfolane mentioned above, but may be various other solvents such as cyclic esters, chain esters, cyclic ethers, and chain ethers.
   Specific examples include: ethylene carbonate, butylene carbonate, dimethyl carbonate, diethyl carbonate, γ-butyrolactone, 2-methyl-γ-butyrolactone, acetyl-γ-butyrolactone, γ-valerolactone, 1,2-dimethoxyethane, 1,2-ethoxyethane, diethyl ether, diethylene glycol diethyl ether, triethylene glycol diethyl ether, ethylene glycol dialkyl ether, diethylene glycol dialkyl ether, triethylen eglycol dialkyl ether, tetraethylene glycol dialkyl ether, dipropyl carbonate, methyl ethyl carbonate, methyl butyl carbonate, ethylpropyl carbonate, butylpropyl carbonate, propionic acid alkyl ester, malonic acid dialkyl ester, acetic acid alkyl ester, tetrahydrofuran (THF), alkyltetrahydrofuran, dialkyltetrahydrofuran, alkoxytetrahydrofuran, dialkoxytetrahydrofuran, 1,3-dioxolane, alkyl-1,3-dioxolane, 1,4-dioxolane, 2-methyltetrahydrofuran, dimethyl sulfoxide, 1,3-dioxolane, formamide, dimethylformamide, dioxolane, acetonitrile, nitromethane, methyl formate, methyl acetate, methyl propionate, ethyl propionate, trialkyl phosphate, maleic anhydride, and 3-methylsulfolane, all of which may be used either alone or in combination. In particular, a mixture of propylene carbonate and sulfolane, as in Example above, is preferable because it shows good heat resistance.
   A preferable supporting salt is tetraethylammonium tetrafluoroborate or triethylmethylammonium tetrafluoroborate. However, it is also possible to use (C₂H₅)₄PBF₄, (C₃H₇)₄PBF₄, (C₂H₅)₄PPF₆, (C₂H₅)₄PCF₃SO₄, (C₂H₅)₄NPF₆, LiClO₄, LiPF₆, LiBF₄, and LiN(CF₃SO₂)₂, which may be used either alone or in combination.
(7) In order to further enhance the sealing performance of the gasket 8, it is possible that the gasket is coated with a liquid sealant made from at least one material among hydrocarbon-based or fluorine-based oil such as asphalt and butyl rubber, chlorosulfonated polyethylene, and epoxy resin, diluted by a solvent as necessary.

Only selected embodiments have been chosen to illustrate the present invention. To those skilled in the art, however, it will be apparent from the foregoing disclosure that various changes and modifications can be made herein without departing from the scope of the invention as defined in the appended claims. Furthermore, the foregoing description of the embodiments according to the present invention is provided for illustration only, and not for limiting the invention as defined by the appended claims and their equivalents.

## Claims

1. An electric double layer capacitor comprising a) an electrode unit having a separator, first and second electrodes opposing each other across the separator therebetween, and an electrolyte solution impregnated in the electrode unit; b) an external lid, formed in a flattened U-shape in cross section, having a top wall and a circumferential wall adjoining the peripheral edge of the top wall; c) an external case, formed in a flattened U-shape in cross section, having a bottom wall and a circumferential wall adjoining the peripheral edge of the bottom wall; and d) a gasket disposed between an outer surface of the external lid and an inner surface of the external case, the electric double layer capacitor being configured so that the external case has an open end part that is bent inwardly with the external lid and the external case being disposed so that inner surfaces of the top wall and the bottom wall face each other, to hermetically close an accommodating space, formed by the external case and the external lid, for accommodating the electrode unit, **characterized in that**:
the thickness of at least the circumferential wall of the external lid is greater than the thickness of the external case; and
the circumferential wall of the external lid extends substantially linearly toward the bottom wall of the external case, and the extending edge of the circumferential wall of the external lid is buried in the gasket.

2. The electric double layer capacitor according to claim 1, wherein the ratio between the thickness of at least the circumferential wall of the external lid and the thickness of the external case is 1.1 : 1 to 2 : 1.

3. The electric double layer capacitor according to claim 1 or 2, wherein the circumferential wall of the external lid comprises a first circumferential wall having a smaller diameter and adjoining the peripheral edge of the top wall, and a second circumferential wall having a larger diameter and adjoining the first circumferential wall.

4. The electric double layer capacitor according to claim 3, wherein the extending edge has, at a bottom surface thereof, a recessed part into which the gasket fits.

5. The electric double layer capacitor according to claim 4, wherein the recessed part has a depth of from 5 µm to 50 µm.

6. The electric double layer capacitor according to any one of claims 1 through 5, wherein the main component of the gasket is polyether ether ketone.

7. The electric double layer capacitor according to any one of claims 1 through 6, wherein the gasket is heat-treated at a temperature higher than a solder melting point.

8. The electric double layer capacitor according to claim 7, wherein the temperature is 260°C.
